# FASCICULE DE BREVET EUROPEEN

(11) **EP 3 987 861 B1**
(45) Date de publication et mention de la délivrance du brevet: **29.07.2026**
(21) Numéro de dépôt: 20732931.9
(22) Date de dépôt: 18.06.2020
(51) Int. Cl.: H04W 64/00, G01S 5/00, G01S 5/02, G16Y 40/60, H04W 4/30, H04W 4/70, H04W 4/80

(54) **PROCÉDÉ ET TERMINAL POUR LE COMMUNICATION À UN OBJET CONNECTE D'UNE ESTIMATION DE LA LOCALISATION D'AU MOINS UNE BORNE RADIO**
VERFAHREN UND ENDGERÄT ZUR ÜBERTRAGUNG VON EINER SCHÄTZUNG DER LOKALISIERUNG MINDESTENS EINES FUNKGERÄTS AN EINEM VERNETZEN GERÄT
METHOD AND TERMINAL FOR COMMUNICATING TO A CONNECTED OBJECT AN ESTIMATE OF THE LOCATION OF AT LEAST ONE RADIO TERMINAL

(30) Priorité: 24.06.2019 FR 1906777
(43) Date de publication de la demande: 27.04.2022
(73) Titulaire: Orange, 92130 Issy-les-Moulineaux (FR)
(72) Inventeur: KOUNTOURIS, Apostolos, 92326 CHÂTILLON CEDEX (FR); SURBAYROLE, Philippe, 92326 CHATILLON CEDEX (FR)
(86) Numéro de dépôt international: PCT/EP2020/066857
(87) Numéro de publication internationale: WO 2020/260113

(56) Documents cités:
- WO-A1-2016/091284
- GB-A- 2 539 952
- "3rd Generation Partnership Project; Technical Specification Group Radio Access Network; Universal Terrestrial Radio Access (UTRA) and Evolved UTRA (E-UTRA); User Equipment (UE) performance requirements for RAT- Independent Positioning Enhancements (Release 15)", 3GPP STANDARD; TECHNICAL SPECIFICATION; 3GPP TS 37.171, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V15.2.0, 4 April 2019 (2019-04-04), pages 1 - 34, XP051723303
- "3rd Generation Partnership Project; Technical Specification Group Services and System Aspects; Release 14 Description; Summary of Rel-14 Work Items (Release 14)", 27 November 2017 (2017-11-27), XP051378860, Retrieved from the Internet <URL:http://www.3gpp.org/ftp/tsg%5Fsa/WG1%5FServ/TSGS1%5F80%5FReno/docs/> [retrieved on 20171127]
- ROHDE & SCHWARZ: "New BLE Reporting Test", vol. RAN WG5, no. Berlin, Germany; 20170821 - 20170825, 10 September 2017 (2017-09-10), XP051324006, Retrieved from the Internet <URL:http://www.3gpp.org/ftp/Meetings_3GPP_SYNC/RAN/Docs/> [retrieved on 20170910]
- CMCC ET AL: "Update to WLAN measurement collection in LTE Logged MDT", vol. RAN WG5, no. Reno, Nevada, United States; 20190513 - 20190517, 2 June 2019 (2019-06-02), XP051746868, Retrieved from the Internet <URL:http://www.3gpp.org/ftp/Meetings%5F3GPP%5FSYNC/RAN/Docs/RP%2D190880%2Ezip> [retrieved on 20190602]

## Description

### DOMAINE TECHNIQUE

La présente invention se rapporte de manière générale au domaine des objets connectés et plus particulièrement aux procédés et aux dispositifs en mesure d'optimiser leurs ressources énergétiques pour se localiser.

### ÉTAT DE LA TECHNIQUE

Dans le cadre des futures évolutions vers l'internet des objets (IoT), le nombre des objets connectés déployés va augmenter de façon considérable. Une très grande partie de ces objets seront des dispositifs très contraints d'une part au niveau matériel, avec un hardware simple et peu couteux à produire, et, d'autre part, au niveau consommation d'énergie pour ne pas avoir à les charger trop régulièrement.

Ces objets devront cependant être connectés à des réseaux radios afin de pouvoir communiquer des informations sur leur statut, leurs mesures, leur état, etc. Ces objets pourront également avoir besoin de connaître leur position afin d'en informer en temps réel ou en temps différé un service ou un tiers. Dans ces cas-là, il serait donc utile que l'objet puisse estimer sa localisation à un degré d'incertitude près.

De plus, d'une part les accès via Wi-Fi^{™} ou de radiocommunication mobile (EDGE, UMTS et LTE etc.) ne sont pas toujours disponibles et, d'autre part, ces réseaux n'ont pas été conçus afin d'optimiser la consommation des terminaux et leur coût de fabrication. Cela pose donc un problème pour les objets connectés qui doivent réduire fortement leur consommation car ils doivent rester autonomes sur de longues durées. Les solutions de géolocalisation utilisant un module GPS (Global Positioning System) ou même des solutions de triangulation via des stations de base mobiles ne sont également pas recommandées dans les cas précités car elles demeurent trop consommatrices en matière d'énergie et trop coûteuses, puisqu'elles nécessitent soit un module GPS, soit un module de radiocommunication mobile.

Des solutions ont été conçues et réalisées afin de palier ces problèmes et notamment des solutions à base de systèmes de type WPS (Wi-Fi Positioning System^{™}) qui permettent de réaliser le positionnement sans recourir aux systèmes de type GPS. Pour cela, un objet doit faire appel à des services distants via une connexion à l'Internet pour disposer de la localisation des bornes radio détectées localement. La localisation des bornes est ensuite utilisée par le service distant pour calculer une estimation de la position de l'objet par différentes méthodes comme celle connue de multilatéralisation. Ensuite, la position de l'objet est envoyée à l'objet par l'intermédiaire de la connexion Internet.

La technique précitée est bien exploitée par un terminal de type smartphone qui peut ainsi se localiser grâce à une combinaison de techniques faisant appel en particulier à son dispositif GPS assisté par le réseau cellulaire (A-GPS) ; de plus, un smartphone peut augmenter la précision de sa localisation en sollicitant, via un accès à Internet, un service de type WPS provisionné par un fournisseur de service. Étant donné que les ressources dont dispose un smartphone sont de loin supérieures à celles dont disposent des objets connectés, réalisés à très bas coût, déployés en grand nombre et devant avoir une autonomie énergétique de très longue durée, de telles solutions ne sont pas appropriées. Les objets connectés dont il est question dans le cadre de la présente invention ne disposent pas d'une connexion Internet standard, ni de mémoire en abondance et d'unité de traitement ayant une puissance suffisante.

L'état de la technique comprend les documents suivants :
- La demande de brevet GB 2539952 A qui présente un réseau maillé dans lequel des unités maîtres communiquent leur localisation à des unités esclaves ;
- La demande internationale WO 2016/091284 A1 qui présente des objets connectés échangeant des messages BlueTooth LE comprenant des indications de localisation ;
- La norme 3GPP sur le Réseau d'Accès Radio fait partie de l'arrière-plan technologique.

### EXPOSE DE L'INVENTION

L'invention vise à améliorer la situation exposée ci-dessus en proposant un procédé et un dispositif d'évaluation de la localisation d'au moins une borne radio par un terminal radio. Ce procédé n'a pas les inconvénients mentionnés plus haut notamment parce qu'en ce qui concerne un objet souhaitant se connecter, le procédé ne nécessite la mise en œuvre d'aucun module de connexion cellulaire consommateur en énergie, tel qu'un module de radiocommunication mobile, ni aucun module de localisation tel qu'un module GPS ou tout autre module de calcul ou de mémoire nécessaire à la mise en œuvre des solutions connues de l'état de la technique. En effet, il est connu que ces modules sont consommateurs en ressources matérielles ou onéreux au regard de l'utilisation prévue.

Le procédé selon l'invention permet ainsi de tirer profit de ressources associées aux terminaux situés dans l'environnement proche de l'objet considéré, notamment des terminaux mobiles de type smartphone, afin de récupérer des données utiles pour que l'objet puisse calculer lui-même sa position et communiquer avec un terminal mobile en utilisant un protocole de communication économique en énergie. Selon le procédé conforme à l'invention, un terminal mobile peut constituer une base de données comprenant des données de localisation de bornes radio situées dans son voisinage, et les diffuser par ondes courtes, dans ce même voisinage, à tout objet connecté souhaitant se localiser.

A cet effet, un objet de la présente invention concerne un procédé de communication à un objet connecté d'une estimation de la localisation d'au moins une borne radio, ce procédé étant mis en œuvre par un terminal mobile et comprenant :
- recevoir, à un instant donné, par l'intermédiaire d'au moins un signal radio reçu, au moins un identifiant de la (au moins une) borne radio ;
- obtenir au moins une estimation de la localisation de la (au moins une) borne radio ;
- associer audit au moins un identifiant la localisation estimée de la (au moins une) borne radio et l'instant donné précité ;
- diffuser l'association résultante par l'intermédiaire d'au moins un signal radio à au moins un objet connecté ;
caractérisé en ce que ladite estimation de la localisation comprend une information de marge d'erreur de ladite estimation.

Grâce au procédé exposé ci-dessus, il est possible pour un terminal mobile radio de diffuser des informations de localisation de borne(s) radio à son entourage. Ces informations seront réceptionnées et utilisées par des objets situés dans cet entourage pour se localiser. Le terminal mobile radio mettant en œuvre le procédé reçoit, à un instant donné, au moins un signal radio en provenance d'au moins une borne radio dans son entourage. Par analyse de ce (au moins un) signal radio, le terminal mobile en extrait des informations concernant la (ou les) borne(s) radio, telles qu'une information d'identifiant ou le cas échéant une ou plusieurs estimations de localisation de la borne radio. Si la borne radio considérée n'est pas en mesure de fournir une telle estimation de localisation, alors le terminal mobile radio peut enclencher d'autres mécanismes afin d'évaluer la localisation de la borne radio.

Le terminal mobile radio associe donc à cet (ou ces) identifiant(s) au moins une estimation de localisation et l'instant de réception du signal radio correspondant en provenance de la borne radio considérée. Cette association de données est ensuite diffusée par le terminal mobile radio vers les objets qui se trouvent dans son voisinage afin de les aider à se localiser. Cette association d'informations peut ensuite être sauvegardée dans le terminal mobile sous la forme d'une entrée dans une base de données et constituer une cartographie de bornes radio.

La solution définie selon le procédé de l'invention représente une solution simple et économique afin de diffuser et relayer des informations de localisation de bornes radio dans un périmètre géographique, à des objets connectés qui se trouvent proches de ces bornes radio et qui ont des contraintes fortes en termes de consommation d'énergie. En effet, ces objets ne pouvant pas utiliser, pour estimer leur propre localisation, des services proposés par des fournisseurs de services de localisation, le procédé proposé ici leur permet d'accéder à de l'information utile, malgré leurs faibles ressources en matériel et en énergie. Un intérêt principal du procédé décrit, réside dans le fait que l'obtention, par un objet considéré, de données de localisation de bornes radio ne nécessite pas l'accès par l'objet à un réseau de données distant, comme un réseau internet par exemple, mais consiste seulement en la réception de données diffusées sur un canal radio par l'intermédiaire d'un terminal mobile, lequel se trouvant à portée radio de l'objet considéré. Cet accès facilité à des données de localisation de bornes radio est, de ce fait, pour ce ou ces objets, peu consommateur en ressources de calcul et par conséquent en énergie.

Grâce à l'invention, et au fait que l'estimation comprend une information de marge d'erreur, il est possible de transmettre une information supplémentaire aux objets cherchant à se localiser. Cette information supplémentaire est diffusée aux objets connectés et permet donc à ces objets de fiabiliser leur localisation grâce à cette information de marge d'erreur d'estimation de localisation. Cette marge d'erreur peut être fournie par un service tiers suite à une requête de localisation effectuée par le terminal mobile radio. Elle peut également être calculée par le terminal mobile radio lui-même, par exemple par l'intermédiaire d'un module de localisation GPS ou bien par le croisement de données de localisation obtenues de tiers (par exemple d'autres terminaux mobile radio ou des services accessibles sur Internet) avec des données calculées par le terminal mobile radio. Le croisement de ces données permet ainsi au terminal mobile radio de recalculer, outre une nouvelle localisation des bornes radio, une nouvelle marge d'erreur et donc d'obtenir une estimation de la localisation plus fiable. Le calcul de cette marge d'erreur peut dépendre de différentes caractéristiques du signal reçu, et transmis par les bornes radio, comme, par exemple, son type, sa puissance et sa fréquence.

Selon un mode de réalisation particulier du procédé exposé plus haut, ladite estimation de la localisation d'au moins une borne radio est réalisée par le terminal mobile ou par un terminal ou un service tiers et est communiquée au terminal mobile.

Grâce à ce mode de réalisation, il est ainsi possible de faire réaliser l'estimation de la localisation d'une borne radio par le terminal mobile lui-même ou par un terminal ou par un service tiers, et cette estimation est ensuite communiquée au terminal mobile. L'estimation de la localisation est réalisée soit par un module de calcul de localisation du terminal mobile (par exemple un module de type GPS) soit par tout autre module tiers, et est ensuite transmise au terminal mobile via un réseau de communication. Cette caractéristique particulière du procédé permet, dans le cas où au moins une borne radio n'est pas en mesure de communiquer au terminal mobile sa localisation, d'obtenir la localisation de cette au moins une borne par en utilisant divers procédés, qu'ils soient propres au terminal mobile radio ou fournis par un tiers. Dans le cas de la fourniture de la localisation de cette au moins une borne par le terminal mobile radio, ce dernier peut décider d'affecter sa propre localisation aux bornes radio en provenance desquelles il a reçu dernièrement le signal radio et qui restent à localiser. Dans le cas de la fourniture de la localisation par un tiers, le terminal peut solliciter un service distant ayant des serveurs accessibles par Internet pour que ce service puisse lui fournir les données d'estimation de la localisation des bornes radio identifiées précédemment. Le terminal radio peut également solliciter d'autres terminaux mobiles ou d'autres bornes radio, directement ou par l'intermédiaire de réseaux de communication, afin de disposer des informations d'estimation de la localisation des bornes radio non encore localisées.

Selon un mode de réalisation particulier du procédé exposé plus haut, ladite estimation de la localisation d'au moins une borne radio est mise à jour suite à l'acquisition, à un instant ultérieur, d'au moins une nouvelle information de localisation d'au moins une borne radio.

Grâce à ce mode de réalisation, il est ainsi possible de mettre à jour l'estimation de la localisation d'au moins une borne radio, suite à l'acquisition à un instant ultérieur, d'au moins une nouvelle information de localisation d'au moins une borne radio. Cette caractéristique particulière de l'invention permet d'améliorer la précision de la localisation d'une borne radio par l'ajout d'informations provenant de terminaux tiers ou du terminal mobile. En effet, cet ajout d'informations de localisation permet au terminal mobile radio de calculer une nouvelle position de la borne radio considérée par des techniques connues de l'état de la technique, telles que des techniques dites de multilatéralisation, triangulation, de barycentre etc. La base de données comprenant les informations d'identification des bornes radio et de leur localisation à un instant donné est donc fiabilisée par l'ajout de des informations susmentionnées en provenance de terminaux tiers.

Selon un mode de réalisation particulier du procédé exposé plus haut, au moins un signal radio diffusé est un signal radio de courte portée.

Grâce à ce mode de réalisation, il est ainsi possible que le signal radio diffusé soit un signal radio de courte portée comme c'est le cas d'un signal Bluetooth^{®}. Cette caractéristique particulière du procédé permet de diffuser un signal de courte portée (par ex. de type Bluetooth^{®}) vers les objets qui cherchent à se localiser. Ce type de signal et notamment les signaux de type Bluetooth^{®} à basse énergie (Low Energy) définissent des protocoles de communication mobile qui permettent d'optimiser l'énergie des terminaux souhaitant communiquer entre eux.

Selon un mode de réalisation particulier du procédé exposé plus haut, au moins un signal radio reçu est un signal issu d'un point d'accès local.

Grâce à ce mode de réalisation, il est ainsi possible que le signal radio reçu soit un signal issu d'un point d'accès local comme un signal Wi-Fi ou Bluetooth^{®} par exemple. Cette caractéristique particulière du procédé permet de recevoir des signaux issus de terminaux qui ont pour fonction d'être des points d'accès locaux et pouvant émettre par exemple en Wi-Fi^{®} ou en Bluetooth^{®} car ce sont les protocoles les plus utilisés par des bornes radio fixes, comme des bornes Wi-Fi installées dans des espaces publics ou dans des zones commerciales. L'intérêt de ces bornes Wi-Fi ou Bluetooth est qu'elles sont nombreuses et diffusent en permanence leur identité. Le fait de restreindre la réception des signaux reçus aux signaux issus de points d'accès locaux tels que des signaux Wi-Fi ou Bluetooth permet également de diminuer la probabilité d'identifier, et donc de localiser, des terminaux mobiles, puisque le procédé selon l'invention vise à créer une base de données de terminaux fixes pour aider des objets connectés à se localiser. L'autre avantage de la réception de signaux radio Wi-Fi ou Bluetooth réside dans leur facilité de mise en œuvre et leur faible consommation, notamment en ce qui concerne les signaux radio Bluetooth Low Energy^{®}.

Selon un mode de réalisation particulier du procédé exposé plus haut, l'association qui est diffusée est celle qui comprend au moins un identifiant associé à au moins une borne radio se trouvant dans un rayon donné autour du terminal mobile.

Grâce à ce mode de réalisation, il est ainsi possible de filtrer les informations de localisation de borne(s) radio à diffuser, pour ne garder que les informations concernant les bornes radio présentant un intérêt pour les objets connectés cherchant à se localiser. Cette caractéristique particulière du procédé selon l'invention permet donc de réduire significativement les informations diffusées par le terminal mobile, en envoyant seulement des données de localisation ou de marge d'erreur liées aux bornes radio qui se trouvent dans un rayon donné autour du terminal mobile radio. La réduction des informations diffusées permet donc de réduire les calculs de traitement de données par les objets connectés qui cherchent à se localiser.

Selon un mode de réalisation particulier du procédé exposé plus haut, l'association qui est diffusée est celle qui comprend l'instant le plus récent de réception d'un identifiant de borne radio.

Grâce à ce mode de réalisation, il est ainsi possible de ne diffuser qu'un fichier de données d'une taille raisonnable vers les objets connectés, un tel fichier ne contenant que les données les plus récentes concernant la localisation des bornes radio estimée par le terminal mobile radio. Cette caractéristique permet également de ne pas garder les informations concernant des bornes radio dont les localisations ont été sauvegardées préalablement dans le terminal mobile radio et qui seraient des bornes mobiles ou des bornes radio fixes qui ne sont plus opérationnelles. En effet, les bornes radio mobiles ou fixes non opérationnelles peuvent ne plus être présentes au voisinage du terminal mobile. Elles ne sont donc pas prises en compte dans la diffusion de l'association précitée.

Selon un mode de réalisation particulier du procédé exposé plus haut, la diffusion de l'association identifiant-localisation comprend des informations de localisation du terminal mobile radio.

Grâce à ce mode de réalisation, il est ainsi possible de transmettre des informations, comme la localisation du terminal mobile radio et éventuellement une marge d'erreur de l'estimation de cette localisation, vers le au moins un objet connecté. Ces informations peuvent être utiles à cet objet connecté pour ensuite estimer sa propre localisation.

Les différents modes ou caractéristiques de réalisation précités peuvent être ajoutés indépendamment ou en combinaison les uns avec les autres, au procédé de communication tel que défini ci-dessus.

L'invention concerne également un terminal mobile radio mettant en œuvre un procédé de communication à un objet connecté d'une estimation de la localisation d'au moins une borne radio, comprenant les opérations suivantes, mises en œuvre par un processeur du terminal mobile :
- recevoir, à un instant donné, par l'intermédiaire d'au moins un signal radio reçu, au moins un identifiant de ladite au moins une borne radio ;
- obtenir au moins une estimation de la localisation de ladite au moins une borne radio ;
- associer audit au moins un identifiant ladite localisation de ladite au moins une borne radio et ledit instant donné ;
- diffuser ladite association par l'intermédiaire d'au moins un signal radio à au moins un objet connecté ;
caractérisé en ce que ladite estimation de la localisation comprend une information de marge d'erreur de ladite estimation.

Un tel terminal est notamment apte à mettre en œuvre le procédé précité de communication d'une estimation de la localisation d'au moins une borne radio à un objet connecté, selon l'un quelconque des modes de réalisation précités.

L'invention concerne encore un programme d'ordinateur comportant des instructions pour la mise en œuvre du procédé de communication à un objet connecté d'une estimation de la localisation d'au moins une borne radio, selon l'un quelconque des modes particuliers de réalisation décrits précédemment, lorsque ledit programme est exécuté par un processeur.

De telles instructions peuvent être stockées durablement dans un support mémoire non transitoire du terminal mobile radio.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de communication précité.

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1 représente un schéma illustratif d'un environnement de communication dans lequel est mis en œuvre un procédé selon l'invention ;
- la figure 2 représente en détail un exemple d'implémentation des principales étapes d'un procédé selon l'invention ;
- la figure 3 représente en détail un autre exemple d'implémentation des principales étapes d'un procédé selon l'invention ;
- la figure 4 représente en détail un autre exemple d'implémentation de certaines étapes d'un procédé selon l'invention ;
- la figure 5 représente un schéma illustratif d'un environnement particulier dans lequel est mis en œuvre un procédé selon l'invention ;
- la figure 6 représente un schéma d'un dispositif mettant en œuvre un procédé de communication selon l'invention ;
- la figure 7 représente un schéma d'un autre dispositif mettant en œuvre un procédé de communication selon l'invention.

### DESCRIPTION DÉTAILLÉE

### Principe général de l'invention

Un terminal mobile radio dispose de capacités de calcul et éventuellement de modules intégrés lui permettant d'estimer la localisation de bornes radio autour de sa position. En effet, de par ses capacités intrinsèques, le terminal mobile radio est en mesure soit de solliciter des services de tiers à distance pour obtenir cette estimation de localisation, soit de réaliser cette estimation par ses propres moyens comme l'utilisation d'un module de localisation de type GPS intégré au terminal.

Le terminal mobile ayant reçu les données de localisation des bornes radio fixes autour de lui peut stocker éventuellement ces données en mémoire pour se constituer une base de données de ces localisations de bornes radio. Ensuite, le terminal mobile radio diffuse en partie ou totalement les informations des estimations de localisation des bornes radio ainsi que leurs identifiants et l'instant de cette estimation à tout objet connecté cherchant à se localiser. Cette diffusion d'informations est réalisée par voie radio utilisant des protocoles connus des objets connectés comme par exemple les protocoles Wi-Fi^{®} ou Bluetooth^{®}. Le procédé de l'invention privilégie les protocoles de communication radio adaptés à l'optimisation de l'énergie et des ressources de calcul d'un système, comme c'est le cas par exemple du protocole Bluetooth Low Energy^{®}.

Pour estimer de manière fiable sa localisation, l'objet connecté qui réceptionne les informations diffusées par le terminal mobile a besoin d'estimations de bornes radio fixes situées dans son entourage. L'estimation est encore plus fiable si l'objet connecté réceptionne des informations sur la marge d'erreur des estimations de localisation des bornes radio dans son entourage.

Le procédé de l'invention ne définit pas une méthode pour différencier les bornes fixes des autres équipements qui seraient mobiles, cependant, un choix judicieux de protocoles radio réceptionnés par le terminal mobile, permet déjà de filtrer et donc de ne pas réceptionner une grande partie des signaux provenant de ces équipements mobiles car ces protocoles sont majoritairement utilisés par des bornes radio fixes. De plus, le principe de l'invention est de capitaliser sur un gros volume de terminaux mobiles disposant de ces informations de localisation de bornes radio afin de comparer ces données et de supprimer toutes les données issues d'équipements mobiles. De même, l'objet connecté peut également réaliser cette comparaison et ce filtrage car il peut être en mesure de recevoir une quantité importante d'estimations de localisation de bornes radio situées dans son voisinage, étant donné la densité importante de terminaux mobiles, tels que des smartphones, ou d'objets connectés sophistiqués tels que des navigateurs GPS ou des montres connectées.

### Modes particuliers de réalisation

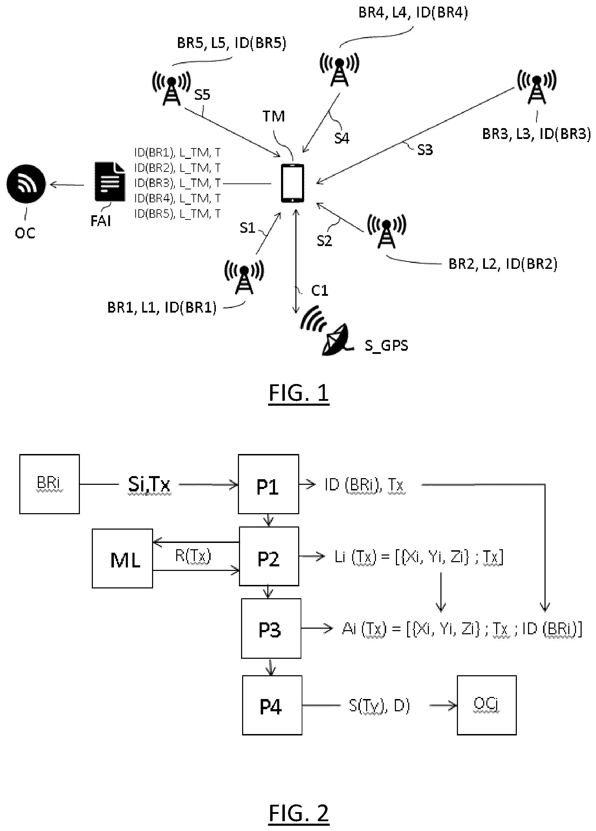

Il est décrit ci-après, en référence aux figures 1 à 7, un procédé et dispositifs assocoiés, de communication d'une estimation de la localisation d'au moins une borne radio, à un objet connecté.

Un tel procédé se déroule de la manière suivante.

Sur **la** **figure 1****,** il est illustré un terminal mobile radio TM. Ce terminal mobile radio TM peut être un smartphone ou tout appareil mobile ayant des capacités de calcul et de traitement d'un ordinateur. Ce terminal est en mesure de recevoir différents types de signaux radio. Dans cet exemple, le terminal mobile radio TM reçoit cinq signaux différents nommés S1 à S5, directement issus de bornes radio respectivement nommées BR1 à BR5. Dans cet exemple de mise en œuvre, les signaux sont de type Wi-Fi^{®}. Dans le protocole Wi-Fi, il est prévu qu'un terminal émetteur, en l'occurrence une borne radio Wi-Fi dans cet exemple, puisse émettre en permanence un signal permettant d'identifier ce terminal. L'identificateur d'un réseau Wi-Fi diffusé par la borne radio Wi-Fi attachée à ce réseau est nommé SSID (Service Set Identifier). Dans cet exemple de mise en œuvre, les identifiants ID(BR1) à ID(BR5) des bornes radio Wi-Fi respectives BR1 à BR5 sont cinq SSID différents. Avec le protocole Bluetooth Low Energy, il est également prévu que chaque borne ou équipement dispose d'un identifiant unique. Le terminal mobile radio TM extrait donc cinq identifiants différents pour les cinq bornes Wi-Fi de son voisinage.

Ensuite le terminal mobile radio TM sollicite un service de type GPS afin d'estimer une localisation des cinq bornes radio par une communication C1 avec un satellite S_GPS et le module GPS (non illustré sur la figure 1) du terminal mobile radio TM. Cette communication C1 lui permet d'obtenir une localisation L_TM qui correspond à une information d'estimation de la localisation du terminal mobile radio TM. Cette information d'estimation peut inclure des coordonnées dans l'espace à trois dimensions mais elle peut également comprendre des informations pour définir une zone de localisation du terminal mobile radio TM. Dans cet exemple de mise en œuvre du procédé, on affecte aux cinq bornes Wi-Fi la même estimation de localisation correspondant à l'estimation de localisation L_TM du terminal mobile radio. Dans ce cas, les estimations de localisation L1 à L5 sont égales à l'estimation de localisation L_TM du terminal mobile radio TM.

Le terminal associe ensuite, pour chaque identifiant envoyé par les cinq bornes radio Wi-Fi, cette localisation L_TM et l'instant de réception T de chacun de ces identifiants. Cet instant correspondant à l'instant de dernière réception des signaux S1 à S5 des cinq bornes. L'instant de réception des cinq signaux ne peut dans les faits être unique, puisqu'il existe un infime décalage de temps entre la réception des différents signaux. Cependant, selon le procédé, on considère un instant T unique qui se trouve dans une échelle de temps telle que l'on considère que la réception des signaux est quasi-simultanée. C'est donc ensuite cette association d'informations qui est diffusée par le terminal mobile radio par voie radio vers tout objet connecté OC qui souhaite se localiser. L'objet connecté OC reçoit donc au moins une association d'informations ID(BR1), L_TM, T. Dans l'exemple représenté, l'objet connecté OC reçoit cinq associations d'informations ID(BR1), L_TM, T à ID(BR5), L_TM, T. Ces différentes associations d'informations peuvent prendre la forme d'un fichier informatique FAI de type fichier plat ou même une base de données. Le fichier FAI doit cependant être adapté à des objets connectés OC qui ont de faibles ressources de calcul. Ce fichier FAI d'association d'informations peut également contenir des associations d'informations issues de signaux reçus à des instants préalables afin de permettre à l'objet connecté d'estimer sa localisation de manière plus fiable, par le recoupement de ces associations d'informations à des instants différents.

Sur la **figure 2****,** il est illustré un exemple d'implémentation des principales étapes du procédé de l'invention qui sont mises en œuvre par un terminal mobile radio. En P1, il est procédé à la réception, à l'instant Tx, d'au moins un signal radio Si issu d'au moins une borne radio BRi se trouvant à portée radio du terminal mobile. Le traitement opéré par le terminal mobile radio en P1 permet d'extraire au moins un identifiant ID(BRi) issu du signal Si. Comme décrit plus haut, le signal Si peut être tout type de signal transportant un protocole permettant d'extraire un identifiant d'une borne radio. La borne radio comprend tout équipement en mesure de diffuser régulièrement un signal radio dans son voisinage afin de connecter d'autres équipements radio à différents services locaux ou distants.

En P2, un module de localisation ML est sollicité par l'envoi d'une requête R(Tx) associée à l'instant de réception d'au moins un signal Si. En réponse à cette requête R(Tx) le module de localisation ML fournit une information d'estimation de localisation Li(Tx) d'au moins une borne radio BRi à l'instant Tx, telle que Li(Tx) comprend des coordonnées de localisation {Xi,Yi,Zi} et l'instant Tx. Les coordonnées de localisation peuvent être de tout type, comme par exemple des coordonnées d'un espace euclidien à trois dimensions ou des coordonnées sphériques ou selon tout autre modèle mathématique ou standard permettant de localiser un objet.

Ensuite, en P3, selon le procédé on fait correspondre l'estimation de localisation {Xi,Yi,Zi} avec l'identifiant ID(BRi) et l'instant Tx, pour au moins une borne radio BRi dans une association d'informations Ai (Tx) associée à la borne BRi.

En P4, selon le procédé, cette association Ai(Tx), liée à la au moins une borne radio BRi par l'intermédiaire d'un signal de diffusion S(Ty) à l'instant Ty, est diffusée vers tout objet OCj capable de réceptionner cette diffusion radio. L'instant Ty est évidemment postérieur à l'instant Tx. De plus, selon le procédé, on peut diffuser cette association d'informations à plusieurs instants postérieurs à Tx. On peut même fixer un délai D, afin que la diffusion d'une association d'informations soit possible à plusieurs instants Ty compris entre Tx et Tx + D. Ensuite, une nouvelle diffusion d'au moins une association d'informations réalisée selon le procédé, peut être déclenchée, suite à une nouvelle acquisition de signal à un instant Tx' postérieur à Tx.

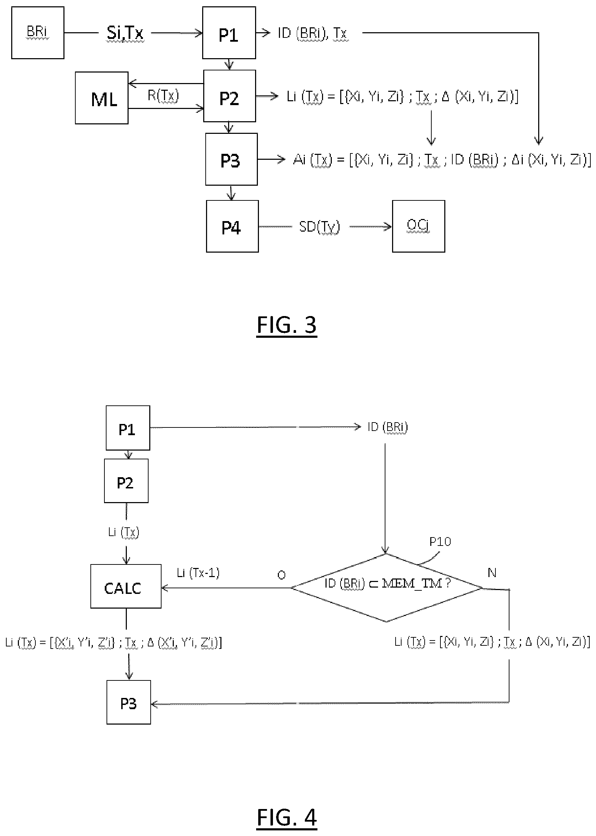

Sur la **figure 3****,** il est illustré un autre exemple d'implémentation des principales étapes du procédé selon l'invention qui sont mises en œuvre par un terminal mobile radio. En P1, il est procédé à la réception, à l'instant Tx, d'au moins un signal radio Si issu d'au moins une borne radio BRi se trouvant à portée radio du terminal mobile. Le traitement opéré par le terminal mobile radio en P1 permet d'extraire au moins un identifiant ID(BRi) issu du signal Si.

En P2, un module de localisation ML reçoit une requête R(Tx) associée à l'instant de réception d'au moins un signal Si. En réponse à cette requête R(Tx), le module de localisation ML fournit une information d'estimation de localisation Li(Tx) d'au moins une borne radio à l'instant Tx, l'information Li(Tx) comprenant des coordonnées de localisation {Xi,Yi,Zi}, une marge d'erreur Δi(Xi, Yi, Zi) sur l'estimation de la localisation, et l'instant Tx. La marge d'erreur est calculée par le module de localisation et permet d'indiquer la précision de l'estimation de la localisation. Cette marge d'erreur peut prendre toute forme possible, mais elle est cependant dépendante du format de données et du système utilisé pour estimer la localisation de la borne Bri considérée.

Ensuite, en P3, on fait correspondre l'estimation de localisation {Xi,Yi,Zi}, la marge d'erreur Δi(Xi, Yi, Zi), avec l'identifiant ID(BRi) et l'instant Tx, pour au moins une borne radio Bri, dans une association d'informations Ai(Tx) concernant la borne BRi.

En P4, l'association Ai(Tx), liée à au moins une borne radio Bri, est diffusée par l'intermédiaire d'un signal de diffusion SD(Ty), à l'instant Ty, vers tout objet OCj capable de réceptionner cette diffusion radio. L'instant Ty de diffusion est évidemment postérieur à l'instant Tx. De plus, selon le procédé, il est possible de diffuser cette association d'informations à plusieurs instants postérieurs à l'instant Tx. Selon le procédé, on peut même fixer un délai D afin que la diffusion d'au moins une association d'informations soit possible à plusieurs instants Ty compris entre Tx et Tx+D. Ensuite, une nouvelle diffusion d'au moins une association d'informations réalisée selon le procédé, peut être déclenchée suite à une nouvelle acquisition de signal à un instant Tx' postérieur à l'instant Tx.

Sur la **figure 4****,** il est illustré un autre exemple d'implémentation du procédé de l'invention mis en œuvre par un terminal mobile radio. Dans cet exemple, selon le procédé on met en œuvre des étapes P1 et P2 qui sont strictement identiques à celles déjà décrites en relation avec les figures 2 et 3.

Le procédé illustré à la figure 4 se distingue des exemples décrits en liaison avec figures 2 et 3, par le fait que chaque identifiant ID(BRi) d'une borne radio BRi, qui est extrait en P1, est comparé, en P10, à d'autres identifiants sauvegardés dans une mémoire MEM_TM du terminal mobile TM. S'il est déterminé que l'identifiant ID(BRi) est déjà présent dans la mémoire MEM_TM (cas "O" sur la figure 4), une opération de calcul CALC est déclenchée, au cours de laquelle une nouvelle estimation de localisation d'au moins une borne radio est calculée. Cette nouvelle estimation de localisation tient compte de la dernière estimation de localisation Li(Tx) obtenue en P2 à l'instant Tx et d'au moins une estimation de localisation Li(Tx-1) sauvegardée dans la mémoire MEM_TM du terminal mobile radio, à au moins un instant préalable Tx-1. Lorsque, selon une mise en œuvre particulière du procédé selon l'invention, plusieurs estimations de localisation Li sont stockées, à plusieurs (P) instants (P étant un entier) Tx-1, Tx-2,....,Tx-P antérieurs à l'instant Tx, l'étape de calcul CALC tient compte alors des P estimations de localisation antérieures, à l'estimation courante Li(Tx), pour calculer une nouvelle estimation Li(Tx) comprenant de nouvelles coordonnées X'i,Y'i,Z'i. Pour calculer cette nouvelle estimation, on peut utiliser des méthodes connues de l'état de la technique, telles que par exemple la méthode de multilatéralisation, de bilatéralisation, de barycentre etc. Les nouvelles coordonnées géographiques précitées concernant au moins une borne radio sont ensuite associées, en P3, avec l'identifiant ID(BRi) de la borne radio et à l'instant courant Tx.

Si à l'issue de l'étape de comparaison P10, il est déterminé qu'au moins un identifiant ID(BRi) n'est pas présent dans la mémoire MEM_TM (cas "N" sur la figure 4), alors, suite à l'étape P2 d'obtention d'une estimation de la localisation Li(Tx) à l'instant courant Tx, aucune étape de calcul supplémentaire CALC n'est effectuée, et on associe, en P3, les informations de localisation Li(Tx) avec l'identifiant ID(BRi) et l'instant courant Tx, comme déjà décrit en référence aux figures 2 et 3.

L'étape de calcul CALC permet de calculer, dans le cas où l'identifiant ID(BRi) de la borne radio est bien présent dans la mémoire MEM_TM, une nouvelle marge d'erreur Δ (X'i, Y'i, Z'i) du calcul d'estimation de localisation, par la prise en compte de la marge d'erreur Δ (Xi, Yi, Zi) obtenue lors de l'étape P2 à l'instant de référence Tx, et de la marge d'erreur Δ (Xi, Yi, Zi) issue de l'estimation de localisation Li(Tx-1), obtenue précédemment et stockée dans la mémoire MEM_TM du terminal mobile, à un instant antérieur Tx-1. L'étape de calcul CALC permet également de calculer, dans le cas précité, une nouvelle marge d'erreur Δ (X'i, Y'i, Z'i) du calcul de l'estimation, par la prise en compte de la marge d'erreur Δ (Xi, Yi, Zi) obtenue lors de l'étape P2 à l'instant de référence Tx, et de plusieurs marges d'erreur Δ (Xi, Yi, Zi) issues de plusieurs estimations de localisation Li(Tx-1), Li(Tx-2)....Li(Tx-P), obtenues précédemment et sauvegardées dans la mémoire MEM_TM du terminal mobile, à respectivement plusieurs instants antérieurs Tx-1, Tx-2.... Tx-P.

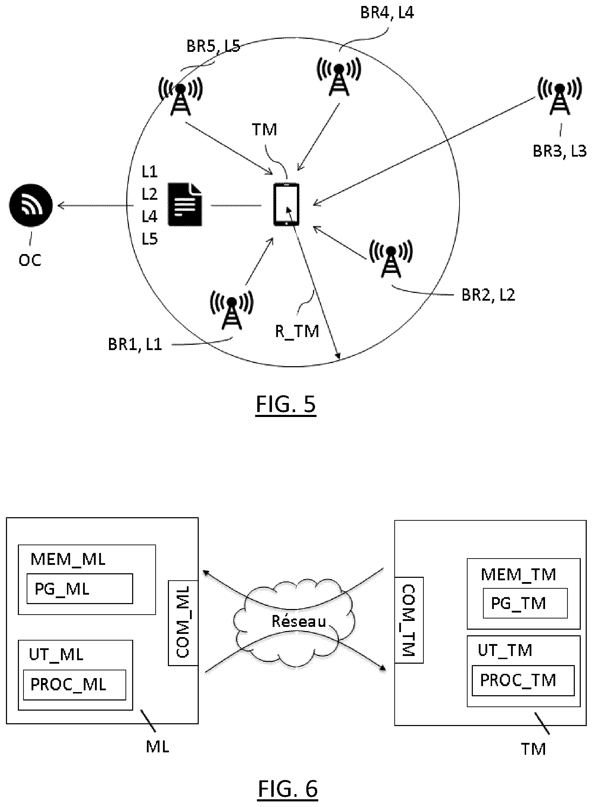

Sur la **figure 5****,** il est illustré un exemple particulier de mise en œuvre de l'invention. Comme exposé plus haut en liaison avec la figure 1, dans le présent exemple, le terminal mobile radio TM, à l'étape P1, réceptionne cinq signaux S1 à S5. A l'issue de l'étape P1, il extrait de ces signaux cinq identifiants, respectivement ID(BR1) à ID(BR5). À l'étape P2, il obtient une estimation de la localisation pour chacune de ces bornes radio, soit cinq estimations L1 à L5 à l'instant courant Tx. À l'étape P3, ces estimations de localisation sont associées aux identifiants des cinq bornes radio et à l'instant courant Tx. À l'étape P4, selon le procédé, seules ces cinq estimations peuvent être diffusées autour du terminal TM, donc vers l'objet connecté OC, par exemple. Selon le procédé, il peut être également décidé dans le terminal mobile TM de diffuser l'ensemble des associations d'informations sauvegardées dans la mémoire MEM_TM du terminal.

Cependant, il se peut qu'une diffusion d'un fichier trop volumineux ne soit pas compatible avec les capacités de calcul et les contraintes en ressources de l'objet connecté réceptionnant les associations d'informations précitées. Dans ce cas, il est possible selon le procédé, de ne diffuser que les associations d'informations concernant les bornes radio, dont la localisation estimée se trouve dans une zone comprise dans un rayon R_TM donné autour d'une estimation de la position du terminal mobile TM. L'estimation de position du terminal peut être effectuée par un module de localisation ML (cf. figures 2 et 3) intégré au terminal mobile TM ou bien accessible à distance par le terminal TM. Avant diffusion des associations d'informations vers l'objet connecté, en P4, on effectue alors, selon le procédé, une opération de tri des bornes radio, dont les estimations de localisation se trouvent dans la zone précitée, et l'on ne sélectionne que les associations d'informations concernant les bornes radio situées dans cette zone. Dans l'exemple représenté, seules les bornes BR1, BR2, BR4, BR5 sont situées dans la zone définie par un cercle de rayon R_TM. Dans ce cas, le terminal mobile TM diffuse donc un fichier de données ne comprenant seulement que les associations d'informations correspondant aux bornes radio situées dans la zone précitée.

Dans un mode de réalisation particulier du procédé, non représenté dans les dessins, on peut décider de ne transmettre que l'association d'informations la plus récente par borne radio BRi, afin de limiter la taille des données transmises dans le signal de diffusion (P4). Cependant, on pourra diffuser l'ensemble de l'historique des associations d'informations sauvegardées dans la mémoire MEM_TM du terminal mobile, afin que l'objet connecté qui réceptionne ces informations dispose d'un nombre conséquent de données pour affiner sa localisation.

Selon un mode particulier de réalisation de l'invention représenté à la **figure 6****, le** procédé de communication est mis en œuvre par le terminal mobile radio TM.

Dans ce mode de réalisation, le module de localisation ML est par exemple un ordinateur ou un serveur. Pour cela, le module de localisation ML a l'architecture classique d'un ordinateur et comprend notamment une mémoire MEM_ML, une unité de traitement UT_ML, équipée par exemple d'un processeur PROC_ML, et pilotée par le programme d'ordinateur PG_ML stocké en mémoire MEM_ML. Le programme d'ordinateur PG_ML comprend des instructions pour mettre en œuvre des actions d'estimation de la localisation d'au moins une borne radio, lorsque le programme est exécuté par le processeur PROC_ML. A l'initialisation, les instructions de code du programme d'ordinateur PG_ML sont par exemple chargées dans une mémoire RAM (non représentée) avant d'être exécutées par le processeur PROC_ML. Le processeur PROC_ML de l'unité de traitement UT_ML met en œuvre une action d'estimation de la localisation d'au moins une borne radio, selon les instructions du programme d'ordinateur PG_ML. Comme déjà décrit plus haut, une telle estimation de la localisation est transmise ensuite au terminal mobile radio TM qui la reçoit en P2 (cf. figures 2 à 4).

Le terminal mobile radio TM est par exemple un smartphone. Pour cela, le terminal mobile radio a l'architecture classique d'un ordinateur et comprend notamment une mémoire MEM_TM, une unité de traitement UT_TM, équipée par exemple d'un processeur PROC_TM, et pilotée par le programme d'ordinateur PG_TM stocké en mémoire MEM_TM. Le programme d'ordinateur PG_TM comprend des instructions pour mettre en œuvre les actions d'évaluation de la localisation d'au moins un émetteur radio fixe par un récepteur radio tel que décrit plus haut, lorsque le programme est exécuté par le processeur PROC_TM. A l'initialisation, les instructions de code du programme d'ordinateur PG_TM sont par exemple chargées dans une mémoire RAM (non représentée) avant d'être exécutées par le processeur PROC_TM. Le processeur PROC_TM de l'unité de traitement UT_TM met notamment en œuvre le procédé de communication d'une estimation de la localisation d'au moins une borne radio à un objet connecté décrit ci-dessus, selon les instructions du programme d'ordinateur PG_TM.

Dans le mode de réalisation représenté en figure 6, le module de localisation ML et le terminal mobile radio TM peuvent être interconnectés et échanger des données sur une ou plusieurs liaison(s) de communication, en utilisant un ou plusieurs réseaux de différents types, (nommé réseau sur la figure 6), et différents protocoles par l'intermédiaire de modules de communication respectivement nommés COM_ML et COM_TM. Des exemples de réseau sont un réseau fixe, un réseau cellulaire (par exemple selon la norme 2G (GSM, GPRS, EDGE), 3G (UMTS), 4G (LTE), LTE-A, LTE-M, WCDMA, CDMA2000, HSPA, 5G, ou leurs variantes ou évolutions), un autre type de réseau radio (par ex. Wi-Fi^{®} ou Bluetooth^{®}), un réseau IP, une combinaison de plusieurs de ces réseaux, etc.

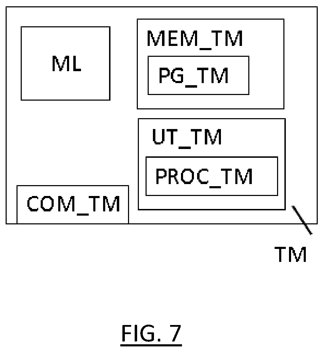

Selon un autre mode particulier de réalisation de l'invention, représenté à la **figure 7****,** le procédé de communication est mis en œuvre par un terminal mobile radio TM tel que décrit plus-haut, mais comprenant un module de localisation ML tel que décrit plus haut.

Il va de soi que les modes de réalisation qui ont été décrits ci-dessus ont été donnés à titre purement indicatif et nullement limitatif, et que de nombreuses modifications peuvent être facilement apportées par l'homme du métier sans pour autant sortir du cadre de l'invention. Le cadre de l'invention est défini par les revendications annexées.

## Revendications

1. **Procédé** de communication à un objet connecté (OC) d'une estimation de la localisation d'au moins une borne radio (BR1-BR5), le procédé étant mis en œuvre par un terminal mobile (TM), et comprenant :
- recevoir, à un instant donné, par l'intermédiaire d'au moins un signal radio (S1-S5) reçu, au moins un identifiant (ID(BRi)) de ladite au moins une borne radio,
- obtenir au moins une estimation (L_TM) de la localisation de ladite au moins une borne radio,
- associer audit au moins un identifiant ladite estimation (L_TM) de la localisation de ladite au moins une borne radio et ledit instant donné,
- diffuser ladite association (FAI) par l'intermédiaire d'au moins un signal radio à au moins un objet connecté (OC), ladite estimation (L_TM) de la localisation comprenant également une information de marge d'erreur de ladite estimation.

2. Procédé selon la revendication 1, dans lequel, ladite estimation (L_TM) de la localisation d'au moins une borne radio (BR1-BR5) est réalisée par le terminal mobile (TM) ou par un terminal ou un service tiers, et est communiquée au terminal mobile (TM).

3. Procédé selon la revendication 1 ou la revendication 2, dans lequel, ladite estimation (L_TM) de la localisation de ladite au moins une borne radio (BR1-BR5) est mise à jour suite à l'acquisition, à un instant ultérieur, d'au moins une nouvelle information de localisation d'au moins une borne radio.

4. Procédé selon la revendication 1, dans lequel, ledit au moins un signal radio diffusé est un signal radio de courte portée.

5. Procédé selon la revendication 1, dans lequel, ledit au moins un signal radio (S1-S5) reçu est un signal issu d'un point d'accès local.

6. Procédé selon la revendication 1, dans lequel, ladite association (FAI) qui est diffusée est celle qui comprend ledit au moins un identifiant associé à la au moins une borne radio (BR1-BR5) se trouvant dans un rayon donné autour du terminal mobile (TM).

7. Procédé selon la revendication 1, dans lequel, ladite association (FAI) qui est diffusée est celle qui comprend l'instant le plus récent de réception d'au moins un dit identifiant.

8. Procédé selon la revendication 1, dans lequel, ladite diffusion comprend des informations de localisation du terminal mobile (TM).

9. **Programme** d'ordinateur comportant des instructions pour la mise en œuvre du procédé de communication à un objet connecté (OC) d'une estimation de la localisation d'au moins une borne radio, selon l'une quelconque des revendications 1 à, 8, lorsque ledit programme est exécuté par un processeur.

10. **Support** d'enregistrement ou support d'informations lisible par un ordinateur, et comportant des instructions d'un programme d'ordinateur selon la revendication 9.

11. **Terminal** mobile radio (TM) mettant en œuvre un procédé de communication à un objet connecté (OC) d'une estimation de la localisation d'au moins une borne radio (BR1-BR5), comprenant les opérations suivantes, mises en œuvre par un processeur du terminal mobile (TM) :
- recevoir, à un instant donné, par l'intermédiaire d'au moins un signal radio reçu (S1-S5), au moins un identifiant de ladite au moins une borne radio ;
- obtenir au moins une estimation (L_TM) de la localisation de ladite au moins une borne radio ;
- associer audit au moins un identifiant ladite estimation (L_TM) de la localisation de ladite au moins une borne radio et ledit instant donné de réception ;
- diffuser ladite association (FAI) par l'intermédiaire d'au moins un signal radio à au moins un objet connecté (OC) ; ladite estimation (L_TM) de la localisation comprenant également une information de marge d'erreur de ladite estimation.

## Patentansprüche

1. Verfahren zur Übertragung einer Schätzung des Standorts mindestens einer Basisstation (BR1-BR5) an ein verbundenes Objekt (OC), wobei das Verfahren von einem mobilen Endgerät (TM) durchgeführt wird und umfasst:
- Empfangen, zu einem gegebenen Zeitpunkt, durch mindestens ein empfangenes Funksignal (S1-S5), mindestens einer Kennung (ID(Bri)) der mindestens einen Basisstation,
- Erhalten mindestens einer Schätzung (L_TM) des Standorts der mindestens einen Basisstation,
- Zuordnen der Schätzung (L_TM) des Standorts der mindestens einen Basisstation und des gegebenen Zeitpunkts zu der mindestens einen Kennung,
- Rundsenden der Zuordnung (FAI) durch mindestens ein Funksignal an mindestens ein verbundenes Objekt (OC),
wobei die Schätzung (L_TM) des Standorts auch eine Information über den Fehlerbereich der Schätzung umfasst.

2. Verfahren nach Anspruch 1, wobei die Schätzung (L_TM) des Standorts mindestens einer Basisstation (BR1-BR5) durch das mobile Endgerät (TM) durchgeführt wird, oder durch ein Drittanbieter-Endgerät oder einen Drittanbieter-Dienst, und an das mobile Endgerät übertragen wird.

3. Verfahren nach Anspruch 1 oder Anspruch 2, wobei die Schätzung (L_TM) des Standorts der mindestens einen Basisstation (BR1-BR5) im Anschluss an die Erfassung, zu einem späteren Zeitpunkt, mindestens einen neuen Standortinformation mindestens einer Basisstation aktualisiert wird.

4. Verfahren nach Anspruch 1, wobei das mindestens eine rundgesendete Funksignal ein Funksignal mit kurzer Reichweite ist.

5. Verfahren nach Anspruch 1, wobei das mindestens eine empfangene Funksignal (S1-S5) ein Signal ist, das von einem lokalen Zugangspunkt stammt.

6. Verfahren nach Anspruch 1, wobei die Zuordnung (FAI), die rundgesendet wird, diejenige ist, welche die mindestens eine Kennung umfasst, die der mindestens einen Basisstation (BR1-BR5) zugeordnet ist, die sich in einem gegebenen Radius um das mobile Endgerät (TM) befindet.

7. Verfahren nach Anspruch 1, wobei die Zuordnung (FAI), die rundgesendet wird, diejenige ist, welche den jüngsten Zeitpunkt des Empfangs mindestens einer besagten Kennung umfasst.

8. Verfahren nach Anspruch 1, wobei die Rundsendung Standortinformationen des mobilen Endgeräts (TM) umfasst.

9. Computerprogramm, welches Anweisungen zur Durchführung des Verfahrens zur Übertragung einer Schätzung des Standorts mindestens einer Basisstation an ein verbundenes Objekt (OC) nach einem der Ansprüche 1 bis 8, wenn das Programm von einem Prozessor ausgeführt wird, umfasst.

10. Aufzeichnungsmedium oder Datenträger, das bzw. der computerlesbar ist und Anweisungen eines Computerprogramms nach Anspruch 9 umfasst.

11. Mobiles Funkendgerät (TM), welches ein Verfahren zur Übertragung einer Schätzung des Standorts mindestens einer Basisstation (BR1-BR5) an ein verbundenes Objekt (OC) durchführt, das die folgenden Operationen umfasst, die von einem Prozessor des mobilen Endgeräts (TM) durchgeführt werden:
- Empfangen, zu einem gegebenen Zeitpunkt, durch mindestens ein empfangenes Funksignal (S1-S5), mindestens einer Kennung der mindestens einen Basisstation;
- Erhalten mindestens einer Schätzung (L_TM) des Standorts der mindestens einen Basisstation;
- Zuordnen der Schätzung (L_TM) des Standorts der mindestens einen Basisstation und des gegebenen Empfangszeitpunkts zu der mindestens einen Kennung;
- Rundsenden der Zuordnung (FAI) durch mindestens ein Funksignal an mindestens ein verbundenes Objekt (OC);
wobei die Schätzung (L_TM) des Standorts auch eine Information über den Fehlerbereich der Schätzung umfasst.

## Claims

1. Method for communicating an estimate of the location of at least one radio endpoint (BR1-BR5) to a connected object (OC), the method being carried out by a mobile terminal (TM), and comprising:
- receiving, at a given time, by means of at least one received radio signal (S1-S5), at least one identifier (ID(Bri)) of said at least one radio endpoint,
- obtaining at least an estimate (L_TM) of the location of said at least one radio endpoint,
- associating said estimate (L_TM) of the location of said at least one radio endpoint and said given time with said at least one identifier,
- broadcasting said association (FAI) to at least one connected object (OC) by means of at least one radio signal,
said estimate (L_TM) of the location also comprising margin of error information for said estimate.

2. Method according to Claim 1, wherein said estimate (L_TM) of the location of at least one radio endpoint (BR1-BR5) is provided by the mobile terminal (TM) or by a third-party terminal or service, and is communicated to the mobile terminal (TM).

3. Method according to Claim 1 or Claim 2, wherein said estimate (L_TM) of the location of said at least one radio endpoint (BR1-BR5) is updated following the acquisition, at a later time, of at least one new piece of location information for at least one radio endpoint.

4. Method according to Claim 1, wherein said at least one broadcast radio signal is a short-range radio signal.

5. Method according to Claim 1, wherein said at least one received radio signal (S1-S5) is a signal deriving from a local access point.

6. Method according to Claim 1, wherein said association (FAI) that is broadcast is the one that comprises said at least one identifier associated with the at least one radio endpoint (BR1-BR5) located within a given radius around the mobile terminal (TM).

7. Method according to Claim 1, wherein said association (FAI) that is broadcast is the one that comprises the most recent time of reception of at least one said identifier.

8. Method according to Claim 1, wherein said broadcast comprises location information for the mobile terminal (TM) .

9. Computer program comprising instructions for carrying out the method for communicating an estimate of the location of at least one radio endpoint to a connected object (OC), according to any one of Claims 1 to 8, when said program is executed by a processor.

10. Computer-readable storage medium or information medium comprising instructions of a computer program according to Claim 9.

11. Mobile radio terminal (TM) carrying out a method for communicating an estimate of the location of at least one radio endpoint (BR1-BR5) to a connected object (OC), comprising the following operations, performed by a processor of the mobile terminal (TM):
- receiving, at a given time, by means of at least one received radio signal (S1-S5), at least one identifier of said at least one radio endpoint;
- obtaining at least an estimate (L_TM) of the location of said at least one radio endpoint;
- associating said estimate (L_TM) of the location of said at least one radio endpoint and said given time of reception with said at least one identifier;
- broadcasting said association (FAI) to at least one connected object (OC) by means of at least one radio signal;
said estimate (L_TM) of the location also comprising margin of error information for said estimate.
